# EUROPÄISCHE PATENTSCHRIFT

(11) **EP 0 522 299 B1**
(45) Veröffentlichungstag und Bekanntmachung des Hinweises auf die Patenterteilung: **06.03.1996**
(21) Anmeldenummer: 92109749.9
(22) Anmeldetag: 10.06.1992
(51) Int. Cl.: G03B 21/56

(54) **Halteschiene für hängend angeordnete Lichtbildwände o. dgl.**
Suspension rail for suspended projection screens or similar
Raie de suspension pour écrans de projection suspendu ou similaire

(30) Priorität: 08.07.1991 DE 9108415 U
(43) Veröffentlichungstag der Anmeldung: 13.01.1993
(73) Patentinhaber: MECHANISCHE WEBEREI GMBH & CO., D-33175 Bad Lippspringe (DE)
(72) Erfinder: Sperber, Georg, W-4792 Bad Lippspringe (DE)
(74) Vertreter: Patentanwälte Dipl.-Ing. Bodo Thielking Dipl.-Ing. Otto Elbertzhagen

(56) Entgegenhaltungen:
- EP-A- 0 291 622
- EP-A- 0 298 021
- CH-A- 668 653

## Beschreibung

Die Erfindung betrifft hängend angeordnete Lichtbildwände oder Tableaus nach dem Oberbegriff der Ansprüche 1 oder 2.

Es ist bereits bekannt, Lichtbildwände, Tableaus oder dergleichen in Schienen parallel zu deren Längsrichtung zu verschieben, siehe z.B. CH-A-668 653. Dabei ist es auch bekannt, daß die Schienen in einem Winkel zueinander angeordnet sind und gegebenenfalls in einer Ecke zusammenstoßen. Geeignete Halteschienen sind z.B. aus den Druchschriffen EP-A-0 291 622 und EP-A-0 298 021 bekannt.

Wenn man die Lichtbildwand, das Tableau oder dergleichen horizontal verschieben will, kann man dies nur innerhalb jedes einzelnen, getrennten Schienenbereichs tun.

Für den Übergang von einem Schienenbereich auf einen anderen Schienenbereich muß die Lichtbildwand, das Tableau oder dergleichen ausgehoben und umgesetzt werden. Ein solches Ausheben und Umsetzen ist auch dann nötig, wenn eine Eckanordnung gewünscht wird, in der die Lichtbildwand mit einem Ende in der einen Schiene und mit dem anderen Ende in der anderen Schiene gehalten wird.

Ausgehend von diesem Stand der Technik liegt der Erfindung die Aufgabe zugrunde, eine Anordnung zu schaffen, bei der ein horizontales Verschieben der Fläche von einer Schiene in die dazu im beliebigen Winkel stehenden Schiene ebenso möglich ist wie das Erreichen von Eck-Zwischenstellungen, ohne daß hierzu die Lichtbildwand, das Tableau oder dergleichen vorher abgehängt werden muß.

Die Lösung dieser Aufgabe erfolgt mit den Merkmalen der Ansprüche 1 oder 2.

Es hat sich als besonders zweckmäßig erwiesen, daß das Bogenstück einteilig an die geradlinigen Schienenstücke angesetzt ist. Hierdurch wird ein besonders sanfter Wechsel möglich, da Trennfugen nicht überlaufen werden müssen.

Erfindungsgemäß weisen die Halteorgane um eine vertikale Achse schwenkbare Rollen auf, mit denen ein besonders gleichmäßiges Laufverhalten erzielt wird.

Nachstehend wird eine bevorzugte Ausführungsform der Erfindung anhand der Zeichnung im einzelnen beschrieben. Es zeigen:

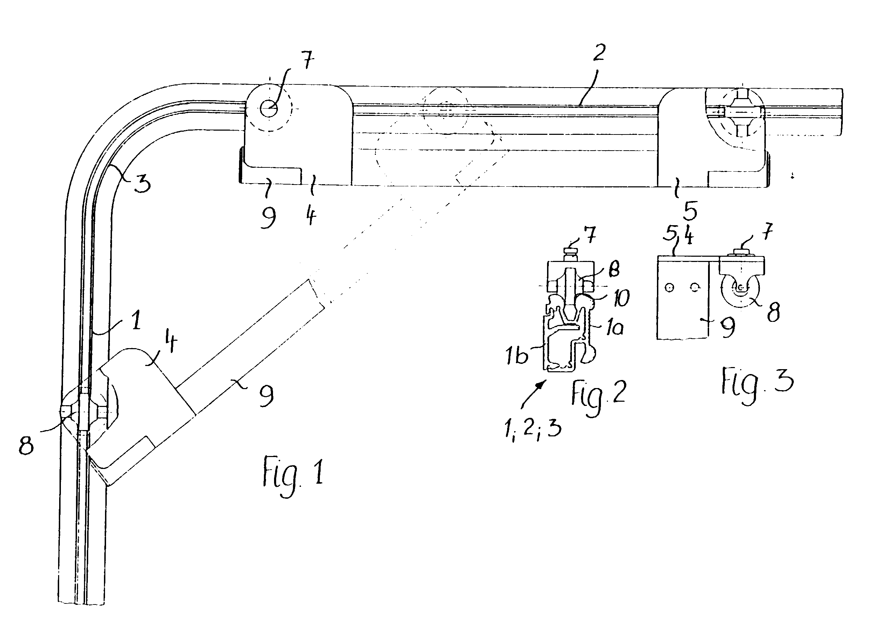

- Figur 1 -: eine Draufsicht auf die Halteschiene mit einem hängend angeordneten Tableau in zwei unterschiedlichen Positionen,
- Figur 2 -: einen Querschnitt durch die Schiene mit Ansicht einer schwenkbaren Rolle,
- Figur 3 -: eine Seitenansicht der Rolle mit Haltevorrichtung und dem oberen Bereich eines Tableaus.

Die Halteschiene besteht aus zwei geradlinigen Bereichen 1 und 2, die über einen bogenförmigen Bereich 3 miteinander verbunden sind. Im dargestellten Ausführungsbeispiel sind die verschiedenen Schienenbereiche einstückig miteinander verbunden. Die Halteschiene besitzt eine an ihrer Oberseite vorgesehene Laufnut 10, an deren abgerundeten Wangen Rollen 8 ablaufen, die an Haltevorrichtungen 4 und 5 um Schwenkachsen 7 verschwenkbar angelenkt sind. Die Halteschienen sind in Längsrichtung geteilt und bestehen im dargestellten Ausführungsbeispiel aus zwei Profilen 1a und 1b.

Zwischen den beiden Haltevorrichtungen 4 und 5 befindet sich ein Tableau 9.

Der Mittelbereich der Laufrolle 8 ist als Spurkranz ausgebildet. Diese Ausbildung stellt sicher, daß die Rolle 8 jeweils passend zur Stellung der Nut 10 um die Schwenkachse 7 verschwenkt wird.

Die Halteschiene wird mittels nicht näher dargestellter Haltevorrichtungen ortsfest montiert. Eine solche Montage kann beispielsweise unterhalb der Decke an zwei benachbarten Wänden erfolgen.

## Patentansprüche

1. Lichtbildwand mit Halteschiene, welche zwei unter einem Winkel zueinander angeordnete, gerade Schienenbereiche (1 und 2) aufweist, die zum Aufnehmen von Rollelementen ausgebildet sind, die an Halteorganen (5; 6) befestigt sind, an denen die Lichtbildwand hängend befestigt ist,
dadurch gekennzeichnet,
daß die Schienenbereiche (1 und 2) über ein entsprechend profiliertes bogenförmiges Verbindungsstück (3) derart miteinander verbunden sind, daß die Halteorgane mit der anhängenden Lichtbildwand horizontal von einem Schienenbereich (2) über das Verbindungsstück (3) zum zweiten Schienenbereich (1) verschiebbar sind, wobei die Halteschiene eine Führungsnut (10) aufweist, in der an den Halteorganen (5; 6) um eine vertikale Achse verschwenkbar gelagerte Laufrollen (8) ablaufen.

2. Tableau (9) mit Halteschiene, welches zwei unter einem Winkel zueinander angeordnete, gerade Schienenbereiche (1 und 2) aufweist, die zum Aufnehmen von Rollelementen ausgebildet sind, die an Halteorganen (5; 6) befestigt sind, an denen das Tableau hängend befestigt ist,
dadurch gekennzeichnet,
daß die Schienenbereiche (1 und 2) über ein entsprechend profiliertes bogenförmiges Verbindungsstück (3) derart miteinander verbunden sind, daß die Halteorgane mit dem anhängenden Tableau horizontal von einem Schienenbereich (2) über das Verbindungsstück (3) zum zweiten Schienenbereich (1) verschiebbar sind, wobei die Halteschiene eine Führungsnut (10) aufweist, in der an den Halteorganen (5; 6) um eine vertikale Achse verschwenkbar gelagerte Laufrollen (8) ablaufen.

3. Lichtbildwand nach Anspruch 1,
dadurch gekennzeichnet,
daß das bogenförmige Verbindungsstück (3) einteilig mit den geraden Schienenbereichen (1 und 2) ausgebildet ist.

4. Tableau nach Anspruch 2,
dadurch gekennzeichnet,
daß das bogenförmige Verbindungsstück (3) einteilig mit den geraden Schienenbereichen (1 und 2) ausgebildet ist.

5. Lichtbildwand nach Anspruch 1 oder 3,
dadurch gekennzeichnet,
daß die Halteschiene aus mindestens zwei in Schienenlängsrichtung geteilten Profilstücken (1a und 1b) zusammengesetzt ist.

6. Tableau nach Anspruch 2 oder 4,
dadurch gekennzeichnet,
daß die Halteschiene aus mindestens zwei in Schienenlängsrichtung geteilten Profilstücken (1a und 1b) zusammengesetzt ist.

## Claims

1. Photographic screen wall with holding rail which has two straight rail areas (1 and 2) arranged at an angle to each other and which are designed to hold rolling elements which are fixed on holding members (5;6) on which the screen wall is fixed hanging,
characterised in that the rail areas (1 and 2) are connected together by a correspondingly profiled curved connector (3) so that the holding members can be displaced with the hanging screen wall horizontally from one rail area (2) over the connector (3) to the second rail area (1) wherein the holding rail has a guide groove (10) in which run rollers (8) which are mounted on the holding members (5;6) to swivel about a vertical axis.

2. Board (9) with holding rail which has two straight rail areas (1 and 2) which are mounted at an angle to each other and which are designed to hold rolling elements which are fixed on holding members (5;6) on which the board is fixed hanging,
characterised in that the rail areas (1 and 2) are connected together by a correspondingly profiled curved connector (3) so that the holding members are displaceable with the hanging board horizontally from one rail area (2) over the connector (3) to the second rail area (1) wherein the holding rail has a guide groove (10) in which run rollers (8) which are mounted on holding members (5;6) to swivel about a vertical axis.

3. Screen wall according to claim 1 characterised in that the curved connector (3) is formed in one piece with the straight rail areas (1 and 2).

4. Board according to claim 2 characterised in that the curved connector (3) is in one piece with the straight rail areas (1 and 2).

5. Screen according to claim 1 or 3 characterised in that the holding rail is formed from at least two profiled members (1a and 1b) divided in the longitudinal direction of the rail.

6. Board according to claim 2 or 4 characterised in that the holding rail is made from at least two profiled members (1a and 1b) divided in the longitudinal direction of the rail.

## Revendications

1. Ecran de projection avec rail de support comprenant deux zones rectilignes (1 et 2), disposées angulairement par rapport l'une à l'autre et conçues pour accueillir des éléments de roulement fixés à des organes de support (5; 6) auquels l'écran de projection est suspendu,
caractérisé en ce que
les zones de rail (1 et 2) sont reliées par un raccord coudé (3) profilé adéquatement et que les organes de support, avec l'écran de projection y suspendu, peuvent être déplacés d'une zone de rail (2) à la deuxième zone de rail (1) en passant par la pièce de raccordement (3), le rail de support présentant une rainure de roulement (10) dans laquelle des rouleaux (8) montés glissent, pivotant autour d'un axe, lesquels équipent les organes de support (5; 6).

2. Tableau (9) avec rail de support présentant deux zones de rail rectilignes (1 et 2), disposées angulairement par rapport l'une à l'autre et conçues pour accueillir des rouleaux fixés à des organes de support (5; 6), auxquels les tableau est fixé suspendu,
caractérisé en ce que
les zones de rail (1 et 2) sont reliés ensemble par un raccord coudé, adéquatement profilé (3) de sorte que les organes de support, avec le tableau y suspendu, peuvent être déplacés horizontalement d'une zone de rail (2) à la deuxième zone de rail (1) en passant par le raccord (3), le rail de support présentant une rainure de guidage (10), dans laquelle glissent des rouleaux (8) qui équipent les organes de support (5; 6) et pivotent autour d'un axe vertical.

3. Ecran de projection selon la revendication 1,
caractérisé en ce que
la pièce de raccordement coudée (3) est formée d'une seule pièce avec les zones de rail rectilignes (1 et 2).

4. Tableau selon la revendication 2,
caractérisé en ce que
la pièce de raccordement coudée (3) est formée d'une seule pièce avec les zones de rail rectilignes (1 et 2).

5. Ecran de projection selon la revendication 1 ou 3,
caractérisé en ce que
le rail de support est composé d'au moins deux profilés (1a et 1b) divisés dans le sens longitudinal du rail.

6. Tableau selon la revendication 2 ou 4,
caractérisé en ce que
le rail de support est composé d'au moins deux profilés (1a et 1b) divisés dans le sens longitudinal du rail.
